(19) **Europäisches Patentamt**

**European Patent Office**

**Office européen des brevets**

(11) **EP 1 473 352 A1**

(12) **EUROPEAN PATENT APPLICATION**
published in accordance with Art. 158(3) EPC

(43) Date of publication:
03.11.2004 Bulletin 2004/45

(51) Int Cl.⁷: **C10L 1/00**, C10G 2/00

(21) Application number: 03703274.5

(22) Date of filing: 07.02.2003

(86) International application number:
**PCT/JP2003/001345**

(87) International publication number:
**WO 2003/066780 (14.08.2003 Gazette 2003/33)**

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **07.02.2002 JP 2002030671**

(71) Applicant: **EBARA CORPORATION**
**Ohta-ku, Tokyo 144-8510 (JP)**

(72) Inventors:
• **Matsuoka, Kei**
  **Ohta-ku, Tokyo 144-8510 (JP)**

• **Uchino, Akira**
  **Ohta-ku, Tokyo 144-8510 (JP)**
• **Kobayashi, Yukihiro,**
  **c/o Comtec Quest Corporation**
  **Chiba-shi, Chiba 261-0003 (JP)**

(74) Representative: **Wagner, Karl H., Dipl.-Ing.**
**WAGNER & GEYER**
**Patentanwälte**
**Gewürzmühlstrasse 5**
**80538 München (DE)**

(54) **SYSTEM FOR SYNTHESIZING LIQUID FUEL**

(57)  The liquid fuel synthesis system according to the present invention includes a gas purifying apparatus (102) for adjusting components of a synthesis gas containing hydrogen and carbon monoxide or a synthesis gas containing hydrogen, carbon monoxide and carbon dioxide to produce a purified gas, and a liquid fuel synthesis apparatus (300) for synthesizing a liquid fuel (309) using, as a raw material, the purified gas (301a) produced in the gas purifying apparatus. The gas purifying apparatus includes a hydrogen separating apparatus (120) and a bypass line (406) which bypasses the hydrogen separating apparatus. A part of the synthesis gas is passed through the hydrogen separating apparatus to produce high-purity hydrogen (j), and the produced high-purity hydrogen (j) is mixed with the synthesis gas which has passed through the bypass line to adjust the ratio of hydrogen to carbonmonoxide in the purified gas or the ratio between hydrogen, carbon monoxide and carbon dioxide in the purified gas.

FIG. 4

## Description

## Technical Field

The present invention relates to a liquid fuel synthesis system, and more particularly to a liquid fuel synthesis system suitable for synthesis of a liquid fuel using, as a raw material, a combustible gas which is a synthesis gas containing hydrogen, carbon monoxide and carbon dioxide, a synthesis gas produced by pyrolysis of fossil fuels such as natural gas, petroleum and coal, biomass, and various wastes, for example.

## Background Art

In recent years, environmental problems and exhaustion of resources, demands for reducing consumption of quantities of fossil fuels, and the like have led to expectation of putting techniques for synthesizing a liquid fuel using a solid fuel such as coal or biomass, and organic wastes as a raw material into practical use.

In synthesizing a liquid fuel from a solid fuel or wastes, there are a process of converting a solid fuel or wastes to oil directly and a process of gasifying wastes to produce a synthesis gas (produced gas) composed mainly of hydrogen, carbon monoxide, etc., and then synthesizing a liquid fuel using the produced synthesis gas as a raw material. The process involving the gasification is advantageous in that since a synthesis gas is once produced and is then purified to obtain a liquid fuel, a high-quality liquid fuel having high purity can be produced.

In this case, the yield of the liquid fuel can be increased by maintaining the ratio of a hydrogen gas to a carbon monoxide gas ($H_2$/CO ratio) in the synthesis gas and the carbon dioxide content at respective predetermined values depending upon the type of the liquid fuel as a final product.

In the conventional process for synthesizing a liquid fuel by gasification, a process for removing carbon dioxide from a synthesis gas is required before the synthesis gas is led to a liquid fuel synthesis process. This is because the synthesis gas produced by gasification generally contains carbon dioxide excessively. Various methods including physical absorption processes, chemical absorption processes, and the like are used for removing carbon dioxide. These methods, however, disadvantageously require replenishment of an absorption liquid and waste liquid treatment, and involve complicated process. Therefore, although these methods maybe suitable for large-sized apparatuses, in small-sized apparatuses, these methods pose problems of increased equipment cost and increased operation cost.

## Disclosure of Invention

It is therefore an obj ect of the present invention to provide a liquid fuel synthesis system which can produce a liquid fuel at low cost even in small-sized apparatuses using, as a rawmaterial, a synthesis gas containing hydrogen, carbon monoxide and carbon dioxide.

In order to achieve the above objects, according to a first aspect of the present invention, there is provided a liquid fuel synthesis system comprising: a gas purifying apparatus 102 for adjusting components of a synthesis gas containing hydrogen and carbon monoxide or a synthesis gas containing hydrogen, carbon monoxide and carbon dioxide to produce a purified gas; and a liquid fuel synthesis apparatus 300 for synthesizing a liquid fuel 309 using, as a raw material, the purified gas 301a produced in the gas purifying apparatus 102; the gas purifying apparatus 102 comprising a hydrogen separating apparatus 120 and a bypass line 406 which bypasses the hydrogen separating apparatus 120, the gas purifying apparatus 102 being constructed such that a part of the synthesis gas 301a is passed through the hydrogen separating apparatus 120 to produce high-purity hydrogen j, and the produced high-purity hydrogen is mixed with the synthesis gas which has passed through the bypass line 406 to adjust the ratio of hydrogen to carbon monoxide in the purified gas 301a or the ratio between hydrogen, carbon monoxide and carbon dioxide in the purified gas 301a.

The liquid fuel includes, for example, methanol, dimethyl ether, gasoline, and the like. In addition to the adjustment of the components of the synthesis gas, typically the removal of an excessive component is also carried out.

According to the above arangement, the gas purifying apparatus comprises a hydrogen separating apparatus and a bypass line for bypassing the hydrogen separating apparatus, and high-purity hydrogen produced by passing a part of the synthesis gas through the hydrogen separating apparatus is mixed with a synthesis gas which has passed through the bypass line. Therefore, the ratio of hydrogen to carbon monoxide in the purified gas or the ratio between hydrogen, carbon monoxide and carbon dioxide in the purified gas can be adjusted.

When the synthesis gas contains hydrogen and carbonmonoxide, the ratio of hydrogen to carbon monoxide is adjusted. When the synthesis gas contains hydrogen, carbon monoxide and carbon dioxide, the ratio of hydrogen to carbon monoxide or the ratio between hydrogen, carbon monoxide and carbon dioxide should be adjusted.

According to one aspect of the present invention, a liquid fuel synthesis system further comprises a gasification apparatus 101 for pyrolyzing and gasifying a material a to be treated to produce the synthesis gas to be supplied to the gas purifying apparatus 102.

According to one aspect of the present invention, the hydrogen separating apparatus 120 is constructed to remove combustible excessive components k from the synthesis gas and to produce high-purity hydrogen j; and the gasification apparatus 101 is constructed to utilize quantity of heat produced by combustion of the removed excessive components k as a part or the whole of heat of reaction required for the pyrolysis and gasification.

According to a second aspect of the present invention, there is provided a liquid fuel synthesis system comprising: a gasification chamber 1 for internally fluidizing a high-temperature fluidized medium to form a gasification chamber fluidizedbed having a first interface and for gasifying amaterial a to be treated in the gasi fication chamber fluidized bed to produce a synthesis gas b containing hydrogen, carbon monoxide and carbon dioxide; a char combustion chamber 2 for allowing a high-temperature fluidized medium to internally flow to form a char combustion chamber fluidized bed having a second interface and for combusting char h, produced by gasification in the gasification chamber, within the char combustion chamber fluidized bed to heat the fluidized medium; a gas purifying apparatus 102 for adjusting components of the synthesis gas produced in the gasification chamber 1 to produce a purified gas 301a; and a liquid fuel synthesis apparatus 300 for synthesizing a liquid fuel 309 using the purified gas 301a as a raw material; the gasification chamber 1 and the char combustion chamber 2 being constructed such that the gasification chamber 1 and the char combustion chamber 2 are separated from each other in a portion vertically above the interfaces of the fluidized beds by a first partition wall 15 so as toprevent gas flowbetween the two chambers, a communication port 25 for allowing the gasification chamber 1 and the char combustion chamber 2 to communicate with each other is provided in the lower part of the first partition wall 15 so that the height of the upper end of the communication port 25 is as high as or lower than the height of the first interface and the second interface, and the fluidized medium heated in the char combustion chamber 2 is moved from the char combustion chamber 2 to the gasification chamber 1 through the communication port 25; the gas purifying apparatus 102 comprising a hydrogen separating apparatus 120 and a bypass line 406 which bypasses the hydrogen separating apparatus 120, the gas purifying apparatus being constructed such that a part of the synthesis gas is passed through the hydrogen separating apparatus 120 to produce high-purity hydrogen j, and the produced high-purity hydrogen is mixed with the synthesis gas which has passed through the bypass line 406 to adjust the ratio between hydrogen, carbon monoxide and carbon dioxide in the purified gas 301a.

In addition to the adjustment of the components of the synthesis gas, typically the removal of excessive components k should be also carried out.

According to one aspect of the present invention, the hydrogen separating apparatus 120 is constructed to remove combustible excessive components k from the synthesis gas and to produce high-purity hydrogen j; and the gasification apparatus 101 is constructed to utilize quantity of heat produced by combustion of the removed excessive components k as a part or the whole of a heat source for heating the fluidized medium in the char combustion chamber 2.

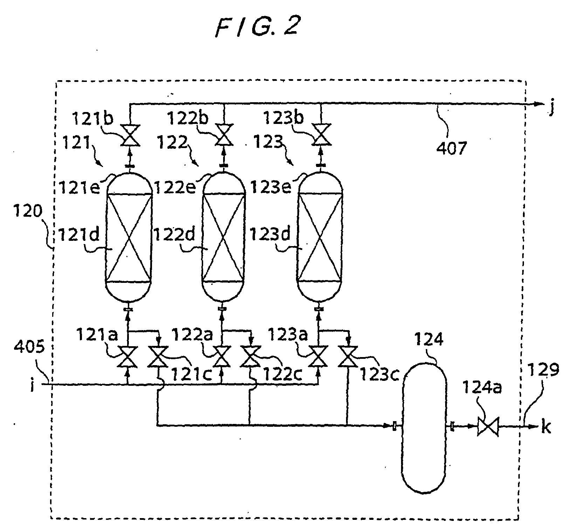

According to one aspect of the present invention, the hydrogen separating apparatus 120 comprises an adsorbent 121d, 122d, 123d for adsorbing the excessive components k and a container 121e, 122e, 123e containing therein the adsorbent and is constructed such that the adsorption of the excessive components k by the adsorbent and the desorption of the excessive components k from the adsorbent are repeated by introducing the synthesis gas into the container and swinging the pressure within the container between a relatively higher pressure and a relatively lower pressure (for example, see FIG. 2).

According to one aspect of the present invention, the liquid fuel synthesis apparatus 300 is constructed to produce a combustible excess gas 307a in synthesizing a liquid fuel, and to mix the combustible excess gas 307a produced in the liquid fuel synthesis apparatus 300 with the synthesis gas on the upstream side of the hydrogen separating apparatus 120.

## Brief Description of Drawings

FIG. 1 is a flow chart of a methanol synthesis system according to a first embodiment of the present invention;

FIG. 2 is a flow chart showing an example of a hydrogen separating apparatus used in embodiments of the present invention;

FIG. 3 is a flow chart showing an example of a methanol synthesis apparatus system used in embodiments of the present invention;

FIG. 4 is a flow chart of a methanol synthesis system according to a second embodiment of the present invention; and

FIG. 5 is a conceptual cross-sectional view showing an example of a gasification furnace used in embodiments of the present invention.

## Best Mode for Carrying Out the Invention

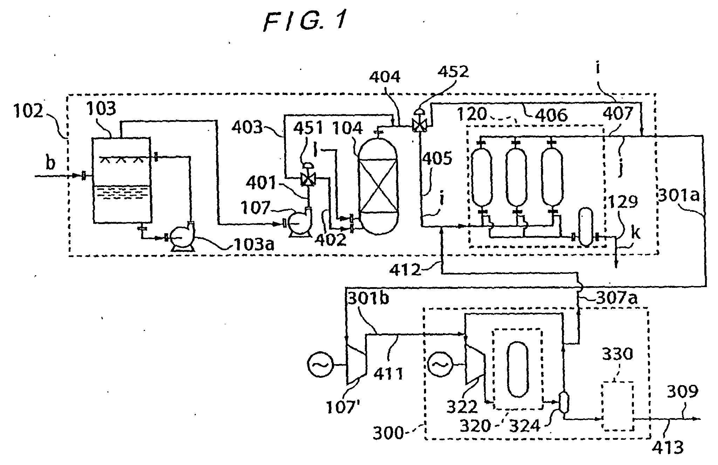

Embodiments of the present inventionwill be describedbelow with reference to drawings. In FIGS. 1 through 5, like or corresponding members are identified with the same reference numerals or similar reference numerals to avoid the repetition of the explanation.

FIG. 1 is a flow chart of a methanol synthesis system according to a first embodiment of the present invention. The methanol synthesis system shown in FIG. 1 is a fundamental embodiment of the present invention and includes a gas purifying apparatus 102 for removing unwanted materials contained in a synthesis gas b and adjusting component ratio between hydrogen, carbonmonoxide and carbon dioxide in the synthesis gas b to produce a purified gas, and a liquid fuel synthesis system 300 serving as a liquid fuel synthesis apparatus for synthesizing a liquid fuel 309 using a purified gas 301a as a raw material. A gas compressing apparatus 107' is provided between the gas purifying apparatus 102 and the liquid fuel synthesis system 300.

A methanol synthesis system will be described as an example of the liquid fuel synthesis system. However, it should be noted that the same system can also be used for the synthesis of other liquid fuels such as dimethyl ether or gasoline.

Further, as shown in FIG. 1, the gas purifying apparatus 102 in the first embodiment typically includes a scrubber 103 serving as an unwanted material removing apparatus for removing unwanted materials contained in the synthesis gas b, a CO shift converter 104 for adjusting component ratio between hydrogen, carbon monoxide and carbon dioxide in the synthesis gas b, and a hydrogen separating apparatus 120. Further, as shown in FIG. 1, the methanol synthesis apparatus system 300 typically includes a methanol synthesis apparatus 320 and a methanol distillation apparatus 330.

The gas purifying apparatus 102 includes a scrubber 103 for scrubbing the synthesis gas b, a gas compressing apparatus 107 for pressurizing the synthesis gas b, a CO shift converter 104 for reacting a carbon monoxide gas (CO), contained in the synthesis gas b, with steam ($H_2O$) to produce a hydrogen gas ($H_2$), and a hydrogen separating apparatus 120 for removing excessive components k from a synthesis gas i after the CO shift conversion to obtain pure hydrogen.

One of ports in a three-way valve 451 is connected to a gas pipe 401 connected to a discharge port of the gas compressing apparatus 107. A pipe 402 connected to the second port of the three-way valve 451 is connected to the CO shift converter 104, and a pipe 403 connected to the third port of the three-way valve 451 is connected to an outlet pipe 404 of the CO shift converter 104 with bypassing the CO shift converter 104. The connecting position of the pipe 403 is between the CO shift converter 104 and a three-way valve 452 (described later on).

One of ports in the three-way valve 452 is connected to an outlet pipe 404 of the CO shift converter 104. A pipe 405 connected to the secondport of the three-way valve 452 is connected to the hydrogen separating apparatus 120, and a pipe 406 connected to the third port of the three-way valve 452 is connected to an outlet pipe 407 of the hydrogen separating apparatus 120 with bypassing the hydrogen separating apparatus 120. A methanol synthesis excess gas pipe 412 extending from the methanol synthesis apparatus system 300 (described in detail later on) is connected to the pipe 405 provided on the downstream side of the three-way valve 452.

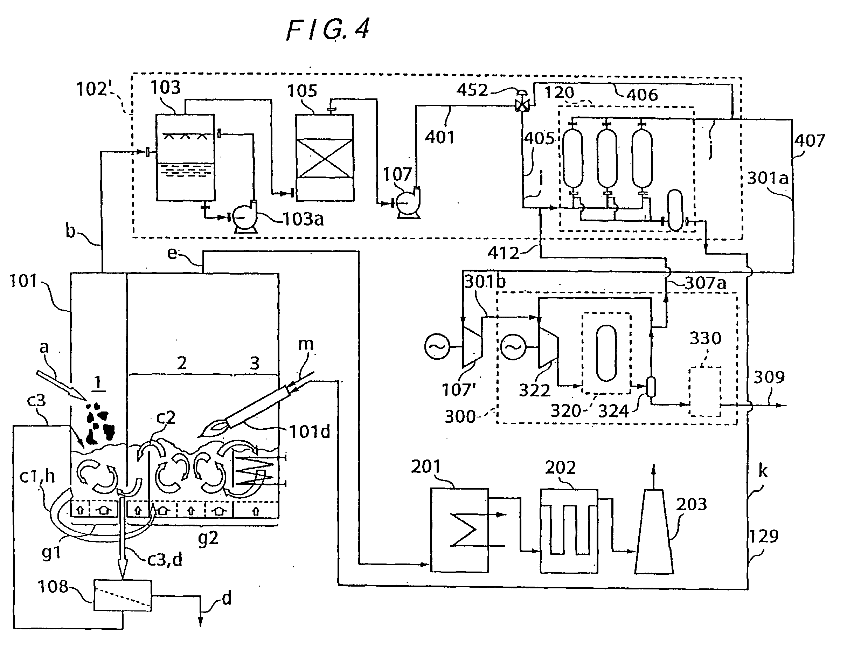

The gas scrubber 103 is constructed as a scrubbing tower comprising a tank-shaped container which is vertically installed. Water stored in the bottom portion of the tower is supplied by a circulation pump 103a to spray nozzles disposed in the upper part of the tower, and is then sprayed into the tower. The synthesis gas b supplied from an integrated gasification furnace 101 (see FIG. 4) is introduced into the lower part of the scrubbing tower and is brought into countercurrent contact with the sprayed water, and thus the synthesis gas b is scrubbed. In particular, solidmatter such as char, a chlorine gas, and the like accompanied by the gas b are removed.

An exhaust port provided on the top of the gas scrubber 103 is connected to the gas compressing apparatus 107. The gas compressing apparatus 107 compresses the synthesis gas after being scrubbed. In particular, the pressure required in the CO shift converter 104 and the hydrogen separating apparatus 120 is preferably not less than 1.5 MPa, more preferably not less than 2.0 MPa. When the flow rate of the gas to be handled is large, the gas compressing apparatus 107 preferably comprises a centrifugal compressor. On the other hand, when the flow rate of the gas to be handled is small, the gas compressing apparatus 107 preferably comprises a positive-displacement compressor such as a'reciprocating compressor.

On the downstream side of the gas compressing apparatus 107, as described above, the CO shift converter 104 is installed through the three-way valve 451, and the gas pipe 403, which bypasses the CO shift converter 104, is provided. The CO shift converter 104 is constructed as a tower comprising a tank-shaped container which is vertically installed. The container is packed with a CO shift conversion catalyst. A steam supply pipe for supplying steam 1 is connected to the CO shift converter 104.

The operation of the methanol synthesis system in the first embodiment will be further described with reference to FIG. 1. In the first embodiment, a synthesis gas containing hydrogen and carbon monoxide or a synthesis gas containing hydrogen, carbon monoxide and carbon dioxide is used as a raw material to synthesize methanol as a liquid fuel. In particular, a gas composed mainly of hydrogen and carbonmonoxide or a gas composedmainly of hydrogen, carbon monoxide and carbon dioxide is preferably used as a raw material. The expression "composed mainly of" as used herein means that the component is contained as a component of the raw material for methanol synthesis to a significant content level rather than a mere impurity level. The synthesis gas may be any gas containing hydrogen and carbon monoxide or any gas containing hydrogen, carbon monoxide and carbon dioxide. The synthesis gas may generally be produced by reforming reaction of natural gas or petroleum, or alternatively may be produced by pyrolysis and gasification of coal, ligneous or plant biomass, various wastes, etc. Further, a by-product gas produced in a blast furnace, a coke oven, or the like may also be used as the synthesis gas.

**[0030]** First, unwanted materials contained in the synthesis gas b are removed in the gas purifying apparatus 102. The unwanted materials are removed particularly by the gas scrubber 103 in the gas purifying apparatus 102. The term "unwanted materials" as used herein typically refers to sulfur-containing gas components such as hydrogen sulfide or carbonyl sulfide, chlorine-containing gas components such as hydrogen chloride, dust, carbon particles, and the like contained in the synthesis gas b. The sulfur-containing gas components and the chlorine-containing gas components deteriorate the catalyst in the methanol synthesis apparatus 320 provided in the subsequent stage and is often causative of the corrosion of plant equipment, and hence they are typically removed down to not more than 10 ppm, preferably not more than 1 ppm, more preferably not more than 0.1 ppm. In order to positively remove sulfides, a desulfurizer should be provided as in the second embodiment shown in FIG. 4.

**[0031]** Solid matter such as dust or carbon particles adheres to an adsorbent in the hydrogen separating apparatus 120 provided downstream of the gas scrubber 103, or a catalyst or the like in the methanol synthesis apparatus 320 to lower performance of the adsorbent or the catalyst. Therefore, the solidmatter should be removed down to a satisfactorily low concentration.

**[0032]** Subsequently, the synthesis gas from which the unwanted materials have been removed is adjusted to a composition suitable for a liquid fuel synthesis reaction in the subsequent stage by adjusting the component ratio of hydrogen to carbon monoxide or the component ratio between hydrogen, carbon monoxide and carbon dioxide in the synthesis gas. Methanol ($CH_3OH$) is synthesized from hydrogen ($H_2$), carbon monoxide (CO) and carbon dioxide ($CO_2$) according to the following two chemical equations.

$$2H_2 + CO \longleftrightarrow CH_3OH \qquad (1)$$

$$3H_2 + CO_2 \longleftrightarrow CH_3OH + H_2O \qquad (2)$$

**[0033]** Equation (1) indicates that 2 moles of hydrogen are necessary to produce 1 mole of methanol from 1 mole of carbon monoxide. Equation (2) indicates that 3 moles of hydrogen are necessary to produce 1 mole of methanol from 1 mole of carbon dioxide. The molar ratio between hydrogen, carbon monoxide and carbon dioxide in the synthesis gas for optimizing both the two reactions can be evaluated by R value determined by the following equation. In the case of R=2, both equation (1) and equation (2) are optimized, and the yield of methanol becomes the highest.

$$R = (H_2 - CO_2)/(CO + CO_2)$$

**[0034]** In this connection, it should be noted that in the case of R=2, the composition is chemically optimal, and, practically, however, loss attributable to the performance of the methanol reactor and the like occurs, and hence R is not less than 2, preferably about 2.1 to 2.2.

**[0035]** When carbon dioxide is not contained in the synthesis gas, the R value is simply a molar ratio of hydrogen to carbon monoxide and the molar ratio of hydrogen to carbon monoxide should be 2, because the reaction proceeds according to equation (1). However, a synthesis gas produced by using a fossil fuel or organic wastes as a raw material generally contains a certain level of carbon dioxide as a result of the equilibrium reaction. In this case, a methanol synthesis reaction according to equation (2) also takes place. The above-defined R value is an index value determined in consideration of the above fact.

**[0036]** In general, the following technique has hitherto been employed for adjusting any synthesis gas containing hydrogen, carbon monoxide and carbon dioxide to an R value of not less than 2. Specifically, at the outset, a part of the synthesis gas is passed through the CO shift converter, where a CO shift reaction represented by the following equation takes place in the presence of a catalyst to convert a part of carbon monoxide in the synthesis gas to hydrogen.

$$CO + H_2O \longleftrightarrow H_2 + CO_2$$

**[0037]** Next, after the CO shift reaction, the resultant gas is mixed with the synthesis gas which has not passed through the CO shift converter and is thus the remainder, thereby adjusting the components of the gas to a final ratio of hydrogen to carbon monoxide of not less than 2. When the ratio of hydrogen to carbon monoxide in the synthesis gas is inherently not less than 2, the above operation is not necessarily required. Therefore, the CO shift converter is also not necessarily required.

**[0038]** Subsequently, carbon dioxide contained in the synthesis gas is removed in a carbon dioxide removing apparatus. In this case, when carbon dioxide can be completely removed, R=2 can be achieved by previously adjusting the ratio of hydrogen to carbon monoxide in the synthesis gas after the CO shift reaction to 2. Depending upon the performance of the carbon dioxide removing apparatus, however, a trace of carbon dioxide remains unremoved. Therefore, R=2 can be finally achieved by previously adjusting the ratio of hydrogen to carbon monoxide after the CO shift reaction to a value slightly higher than 2, depending upon the amount of carbon dioxide remaining unremoved.

**[0039]** Conversely, when the ratio of hydrogen to carbon monoxide in the synthesis gas is inherently much higher than 2, it is not necessary to entirely remove carbon dioxide. In this case, R=2 can be achieved by allowing a trace of carbon dioxide to remain unremoved.

Conventionally, a physical absorption process and a chemical absorption process have been extensively used in the carbon dioxide removing apparatus. Rectisol process is a representative example of the physical absorption process. In the Rectisol process, carbon dioxide contained in the synthesis gas is dissolved and removed in methanol at a low temperature. On the other hand, a representative chemical absorption process is an amine process. In the amine process, carbon dioxide contained in the synthesis gas is chemically reacted with an alkanolamine-based absorption liquid to be adsorbed and removed.

In any of the above processes, carbon dioxide can be released from the absorption liquid by heating the absorption liquid after the absorption of carbon dioxide. Specifically, carbon dioxide contained in the synthesis gas can be continuously removed by circulating the absorption liquid, while repeating heating and cooling, between an absorption column for bringing the synthesis gas into contact with the absorption liquid to absorb carbon dioxide and a regeneration column for heating the absorption liquid to release carbon dioxide to the atmosphere or the like.

These processes are complicated and are thus suitable for relatively large-sized apparatuses. The use of these processes in small-sized apparatuses disadvantageously causes relatively high equipment cost. Further, since a liquid is used as a medium, these processes pose a problem of an increased operation cost of the equipment due to the fact that replenishment of the absorption liquid and the withdrawal of the deteriorated absorption liquid and treatment of the withdrawn absorption liquid are required.

Because of the above problems, according to the embodiment of the present invention, the component ratio between hydrogen, carbon monoxide and carbon dioxide in the synthesis gas is adjusted by utilizing the hydrogen separating apparatus without using the above carbon dioxide removing apparatus.

According to the system in the first embodiment shown in FIG. 1, the synthesis gas which has been scrubbed in the scrubber 103 is led to the three-way valve 451, and a part of the synthesis gas is supplied to the CO shift converter 104. The system is constructed such that the remaining part of the synthesis gas is supplied through the three-way valve and the bypass pipe 403 and is mixed with the gas which has been treated in the CO shift converter 104. In the CO shift converter 104, the ratio of hydrogen to carbon monoxide in the synthesis gas is adjusted to not less than 2. In this case, when the ratio of hydrogen to carbon monoxide in the synthesis gas is inherently not less than 2, this operation is not necessarily required.

The synthesis gas after the adjustment of the ratio in the CO shift converter 104, or the gas supplied directly from the scrubber 103 through the bypass pipe 403, or the synthesis gas whose ratio has been adjusted by mixing the synthesis gas after the adjustment of the ratio in the gas CO shift converter 104 with the gas supplied from the bypass pipe 403 is led to the three-way valve 452, and a part of the synthesis gas is supplied to the hydrogen separating apparatus 120. The remaining part of the synthesis gas from the three-way valve 452 bypasses the hydrogen separating apparatus 120 and is mixed with the gas which has passed through the hydrogen separating apparatus 120.

The three-way valve 451 is preferably constructed so as to serve as a control valve for regulating the ratio of a flow rate of the gas passing through the pipe 402 to a flow rate of the gas passing through the pipe 403. Specifically, the three-way valve 451 serving as the control valve is constructed in the following: The flow rate of the gas in the pipe 402 and the flow rate of the gas in the pipe 403 are regulated such that the above ratio in the pipe 404 jointed to the bypass pipe 403 downstream of the CO shift converter 104, in other words, the above ratio in the upstream of the three-way valve 452 is regulated to a predetermined value by a controller (not shown).

In the hydrogen separating apparatus 120, the synthesis gas i is separated into pure hydrogen j and the other gases k. The pure hydrogen j separated in the hydrogen separating apparatus 120 is mixed with the remaining part of the synthesis gas i which has not passed through the hydrogen separating apparatus 120, thus obtaining a final purified gas 301a. The synthesis gas i which has not passed through the hydrogen separating apparatus 120 is supplied from the three-way valve 452 through the bypass pipe 406, and is mixed with the pure hydrogen j.

The proportion of a part of the synthesis gas to be led to the hydrogen separating apparatus 120 is determined by the content of carbon dioxide contained in the synthesis gas after the adjustment of the ratio of hydrogen to carbon monoxide to not less than 2 in the CO shift converter 104. Specifically, in the case where the ratio of hydrogen to carbon monoxide in the synthesis gas in the CO shift converter has been adjusted exactly to 2 with a trace of carbon dioxide remaining unremoved, the composition ratio of the gas is optimal for the reaction of hydrogen with carbon monoxide according to equation (1) to synthesize methanol. However, the amount of hydrogen is clearly insufficient for the reaction of hydrogen with the residual carbon dioxide according to equation (2) to synthesize methanol.

Thus, a part of the synthesis gas is passed through the hydrogen separating apparatus 120 to obtain pure hydrogen j which will react with carbon dioxide according to equation (2), and the pure hydrogen j is mixed with the remaining part of the synthesis gas i which has not passed through the hydrogen separating apparatus 120, thereby achieving an R value of not less than 2.

The three-way valve 452 is preferably constructed as a control valve for regulating the ratio of a flow rate of the gas passing through the pipe 405 to a flow rate of the gas passing through the pipe 406. Specifically, the three-way valve 452 serving as the control valve is constructed in the following: The flow rate of the gas in the pipe 405 and the flow rate of the gas in the pipe 406 are regulated such that the above ratio in the pipe 407 joined to the bypass pipe 406 downstream of the hydrogen separating apparatus 120, in other words, the above ratio in the pipe upstream of the methanol synthesis apparatus system 300 is regulated to a predetermined value by a controller (not shown).

The hydrogen separating apparatus 120 preferably comprises a pressure swing adsorption-type hydrogen separating apparatus which will be described in detail later with reference to an accompanying drawing. In this hydrogen separating apparatus, a pressurized synthesis gas is passed through a column packed with an adsorbent such as synthetic zeolite to selectively adsorb components other than hydrogen and thus to obtain pure hydrogen. The adsorbent can repeat adsoption and desorption by changing the pressure of the column, and hence can be regenerated and reused.

The pressure swing adsorption-type hydrogen separating apparatus is simple in construction, and has advantages of no significant lowering in efficiency and no increase in equipment cost, even in small-sized equipment. Further, the adsorbent can be used without replacement for a long period of time and operation cost of the apparatus is low. Therefore, as compared to the conventional processes using a carbon dioxide removing apparatus such as physical absorption or chemical absorption, the equipment cost and operation cost can be reduced particularly in small-sized equipment.

On the other hand, in addition to carbon monoxide and carbon dioxide, an excess gas k containing a small amount of hydrogen which has not been recovered as pure hydrogen can be obtained from the hydrogen separating apparatus 120. This excess gas k is combustible and has calorific value, and thus can be utilized as a heat source in the system. Specifically, the excess gas k is combusted in a boiler (not shown), and heat recovery can be performed to obtain steam for a steam turbine power generation, or heat supply to the system can be performed. In a system in which a synthesis gas is produced by reforming or pyrolysis and gasification of a fossil fuel, wastes or the like, the excess gas can be utilized as a heat source for reforming or pyrolysis.

The purified gas 301a having the adjusted components is pressurized in the gas compressing apparatus 107' to a pressure necessary for methanol synthesis, and is then led to the methanol synthesis apparatus system 300. As with the compressor 107, the gas compressing apparatus 107' should comprise a centrifugal compressor or a positive-displacement compressor depending upon the flow rate and pressure of the gas to be handled.

In the methanol synthesis apparatus 300, as will be described in detail with reference to the accompanying drawings, in general, in order to increase the yield in the methanol synthesis, the gas after the reaction is cooled and gas-liquid separation is carried out to separate liquid components (crude methanol) containing impurities such as water and ethanol in addition to the synthesized methanol and unreacted gas components, and the unreacted gas is then recycled to the synthesis apparatus. In this case, in order to avoid the accumulation of gas components, including inert gases such as nitrogen or argon and hydrocarbons, which have not contributed to the methanol synthesis, a given amount of unreacted gas should always be withdrawn to the outside of the system as an excess gas 307a which is an excess gas in liquid fuel synthesis.

As with the excess gas k in the hydrogen separating apparatus, this excess gas 307a is combustible and has calorific value, and hence the excess gas 307a may be used as a heat source in the system. However, because the excess gas 307a contains unreacted hydrogen, the excess gas is passed through apipe 412 and is returned to the upstream of the hydrogen separating apparatus 120. The utilization of the recovered hydrogen can enhance the reaction efficiency of the whole system.

A pressure swing adsorption-type hydrogen separating apparatus (hydrogen PSA) used in this embodiment will be described as an example of the hydrogen separating apparatus with reference to a flow chart of FIG. 2. This pressure swing adsorption-type hydrogen separating apparatus 120 includes three adsorption columns 121, 122 and 123 and an excess gas holder 124.

The adsorption columns 121, 122 and 123 include containers 121e, 122e and 123e, respectively, and adsorbents 121d, 122d and 123d packed into the respective containers. In this embodiment, the adsorbent comprises a synthetic zeolitic material.

The pipe 405 for introducing the synthesis gas i is branched toward the three adsorption columns, and the branched pipes are connected to the respective containers 121e, 122e and 123e of the adsorption columns through respective valves 121a, 122a and 123a. Pipes between the valves 121a, 122a and 123a and the adsorption columns 121, 122, 123 are branched, respectively, and the branched pipes are extended through valves 121c, 122c and 123c and then joined to a single pipe which is connected to the excess gas holder 124.

A pipe 129 for discharging the excess gas k is connected to the excess gas holder 124, and is provided with a valve 124a.

On the other hand, pipes for discharging high-purity hydrogen j are connected to the containers 121e, 122e and 123e of the three adsorption columns, respectively. The pipes are providedwith valves 121b, 122b and 123b, respectively. The pipes are joined to a single pipe 407 on the downstream side of the valves 121b, 122b and 123b.

The operation of the pressure swing adsorption-type hydrogen separating apparatus 120 will be described below. In this hydrogen separating apparatus 120, the gas components contained in the gas i are separated from one another by utilizing a rate difference of physical adsorption by the adsorbent between the gas components. The synthesis gas (mixed gas) i as a raw material is compressed to a pressure necessary for the adsorption of the excess gas components k and is then led to the adsorption column. Gas components contained in the mixed gas i are adsorbed in order of molecular weight by the adsorbent packed into the adsorption column. That is, a higher molecular weight gas component is adsorbed preferentially.

Therefore, hydrogen gas, which is the lowest molecular weight component, has the lowest rate of adsorption by the adsorbent. Therefore, if design is made so that the residence time of the mixed gas within the adsorption column, i.e., the time of contact between the mixed gas and the adsorbent is proper, then excessive components other than hydrogen contained in the mixed gas are substantially entirely adsorbed by the adsorbent, and hence a product gas discharged from the outlet of the adsorption column consists essentially of pure hydrogen. In general, since a part of the hydrogen gas is also adsorbed by the adsorbent, the rate of hydrogen gas recovered as a product gas (pure hydrogen) from the hydrogen gas contained in the mixed gas as a raw material is about 80%. However, a product gas having hydrogen purity of not less than 99.99% can be easily obtained.

Since the adsorbent has a limited capability of adsorbing the excess gas components, when the mixed gas i is continuously passed through the adsorption column for a considerably long period of time, the excess gas components k are no longer adsorbed by the adsorbent, thus lowering purity of the product gas (pure hydrogen) j. Therefore, it is necessary to desorb the excess gas components k adsorbed by the adsorbent after the mixed gas has been passed through for a given period of time.

The amount of the excess gas components k adsorbed by the adsorbent greatly varies with the pressure, and the higher the pressure is, the more gas components k are adsorbed. By utilizing this property, the adsorption of the excess gas components k by the adsorbent and the desorption of the excess gas components k from the adsorbent can be repeated by repeatedly changing (swinging) the pressure within the adsorption column between a high pressure and a low pressure.

The larger the pressure differential between the adsorption and the desorption is, the higher the efficiency of gas separation is. However, since this increases power consumption in the compression of the raw material gas i, the excessively large pressure differential is not always appropriate. In general, the pressure within the adsorption column is preferably not less than 1.5MPa, more preferably not less than 2.0MPa. The desorption is carried out at the atmospheric pressure or thereabouts. As will be described later, when the utilization of the excess gas k is taken into consideration, it is desirable that the desorption is carried out under a slightly pressurized atmosphere of about 0.1 to 0.2 MPa.

Both the adsorption and the desorption are carried out in the range of room temperature to about 50°C. During the desorption of the excess gas k, the mixed gas i as the raw material cannot be treated, and hence a plurality of adsorption columns 121, 122 and 123 are provided as shown in FIG. 2, and the column to be used for the desorption is switched one after another and the desorption can always be carried out in any one of the adsorption columns 121, 122 and 123.

The excess gas holder 124 comprises a tank for temporarily storing the excess gas k after the desorption. The excess gas holder 124 is provided for the following reason. The desorption process is intermittently carried out. Therefore, in the case where the excess gas k after the desorption is utilized as a fuel gas, it is desirable that the gas k after the adsorption be temporarily stored. This enables the gas to be continuously supplied. For some applications of the gas k, the excess gas holder may not be provided.

Further, concrete operation of the pressure swing adsorption-type hydrogen separating apparatus 120 comprising the three adsorption columns 121, 122 and 123 will be described with reference to FIG. 2. An explanation will be made in the case where adsorption, desorption and pressurization are carried out in the three adsorption columns 121, 122 and 123, respectively.

The mixed gas i as the raw material is pressurized to a necessary pressure in the pressure swing adsorption-type hydrogen separating apparatus 120. In the excess gas holder 124, the excess gas k is always released at a constant flow rate to the outside by regulating the opening degree of the valve 124a to keep the inside of the holder 124 at a low pressure around the atmospheric pressure.

It is assumed that the adsorption is carried out in the adsorption column 121. Valves 121a and 121b are opened, and a valve 121c is closed. The pressurized mixed gas i as the raw material is led into the column 121, where the excess gas components k contained in the mixed gas i are adsorbed by an adsorbent 121d. At this time, hydrogen gas remaining unadsorbed is passed through the valve 121b and is discharged as a product gas (pure hydrogen) j to the outside.

In this case, desorption is carried out in the adsorption column 122. The valves 122a and 122b are closed, and the valve 122c is opened. The column 122 is depressurized until the pressure within the column 122 is substantially equal to the pressure in the excess gas holder 124. Thus, the excess gas components k, which have been adsorbed by the adsorbent 122d in the previous adsorption operation, are released through the valve 122c into the excess gas holder 124.

At this time, in the adsorption column 123, the valve 123a is opened, the valve 123b is closed, and the valve 123c is closed. The pressurized mixed gas i as the raw material is led into the column 123 to pressurize the inside of the column. Until the inside of the column 123 is sufficiently pressurized, the adsorption of the excess gas components k by the adsorbent 123d is not satisfactorily carried out. Therefore, the valve 123b is closed to prevent the excess gas components k from being mixed into the product gas (pure hydrogen) j.

In the three adsorption columns 121, 122 and 123, the separation of hydrogen from the mixed gas i as the raw material can be continuously carried out by successively repeating the above three operations.

As the number of columns increase, the desorption interval of one adsorption column can be increased. Thus, sufficient adsorption time can be ensured to increase the recovery efficiency of the product gas (pure hydrogen). In general, as shown in the drawing, the number of columns should be three or more, and four to ten columns are preferable.

In the above embodiment, as anadsorbent, azeoliticmaterial for adsorbing the excess gas components has been described. Alternatively, a material capable of adsorbing hydrogen, for example, a hydrogen absorbing alloy may be used. By swinging the pressure, adsorption and desorption of hydrogen takes place. In this case, hydrogen flows toward the holder 124, and excess gas flows toward the valves 121b, 122b and 123b. Therefore, a holder similar to the holder 124 is preferably provided on the downstream side of the valves 121b, 122b and 123b.

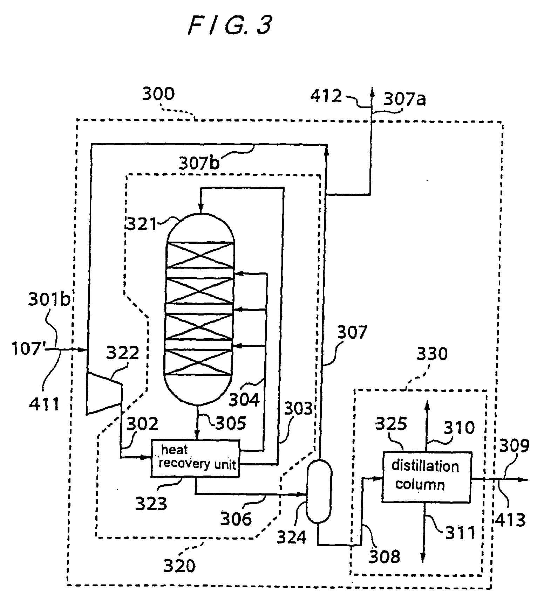

Next, an example of the methanol synthesis apparatus system 300 will be descried with reference to a flow chart of FIG. 3. This synthesis apparatus system is an adiabatic quench-type reactor. The gas 301b pressurized by the gas compressing apparatus 107' to a methanol synthesis reaction pressure is supplied to the methanol synthesis apparatus system 300 through the pipe 411. The compressed gas 301b supplied to the methanol synthesis apparatus system 300 joins an unreacted circutation gas 307b (described later on), and the mixture is supplied to the suction side of a circulator 322. The circulator 322 may comprise a centrifugal blower.

In the adiabatic quench-type reactor, the synthesis gas is preheated in a heat recovery unit 323 to a temperature necessary for the reaction. Thereafter, the gas 303 whose amount is 40 to 60% of the total amount of the synthesis gas as the raw material is supplied to a first catalyst layer within a methanol synthesis column 321. The remaining gas 304 is supplied as a quench gas for regulating the temperature of a second catalyst layer and catalyst layers underlying the second catalyst layer to a proper temperature, to portions between the adjacent catalyst layers and is uniformly mixed with the gas which has passed through the upper catalyst layer. Thus, the temperature of the reaction gas which has been increased due to an adiabatic reaction in the catalyst layer is lowered, thus regulating the temperature of the next catalyst layer to a proper temperature. The heat recovery unit 323 may comprise a heat exchanger.

The heat held by an outlet gas 305 of the methanol synthesis column 321 is recovered in the heat recovery unit 323 by, for example, preheating of the synthesis gases 303, 304 as a raw material to be supplied to the synthesis column 321, or generating low-pressure steam used in a distillation process (described later on) , and hence the outlet gas 305 is cooled. The cooled gas 306 is separated in a high-pressure separator 324 into crude methanol 308 and an unreacted gas 307. In order to keep the concentration of inert components such as methane and nitrogen accumulated in the unreacted gas 307 at a constant level, a given amount of gas is withdrawn as a purge gas 307a through the pipe 412. The remaining gas 307b is compressed as a circulation gas in the circulator 322, together with the synthesis gas 301b supplied from the compression process as described above, and is preheated in the heat recovery unit 323, and is then supplied to the methanol synthesis column 321.

The separated crude methanol 308 is distilled in a distillation column 325. The crude methanol 308 is purified through the distillation process into a product methanol 309. The distillation column 325 comprises two columns, an initial distillation column and a rectification column (not shown). The initial distillation column is operated substantially at the atmospheric pressure to distill-off components 310 with the lower boiling points such as methyl formate, dimethyl ether and acetone, and paraffins from the crude methanol. The rectification column is operated substantially at the atmospheric pressure or under a pressure of about 0.1 MPa to distill-off components 311 with the higher boiling points such as water and higher alcohols, thus obtaining product methanol 309. The product methanol is withdrawn through the pipe 413.

In the methanol synthesis column 321, the synthesis gas composed mainly of carbon monoxide and an aqueous material is reacted in the presence of a catalyst composed mainly of copper and zinc under conditions of a pressure of 5 to 10 MPa and a temperature of 200 to 300°C to synthesize methanol. This reaction is an exothermic reaction and generates a large quantity of heat. As described above, this heat of reaction is recovered in the heat recovery unit 323 and is utilized. Since the removal of the heat of reaction with high efficiency is effective in enhancing the reaction efficiency, boiler water is supplied through a supply pipe (not shown) to the heat recovery unit 323 for heat recovery and the heat of reaction is recovered as medium-pressure steam having a temperature of about 200°C.

Further, since the methanol synthesis reaction is an equilibrium reaction, the yield is not so high only by passing the reaction gas once through the synthesis column 321. Therefore, as described above, the reaction gas is circulated by means of the circulator (a circulation blower) 322. It is necessary to withdraw the produced methanol and inert components such as nitrogen and argon which are not involved in the reaction, from the circulation system. The inert gas components are discharged as a purge gas to the outside of the system. However, since only the inert gas components cannot be removed from the reaction system, the concentration of the inert gas components in the reaction system is kept constant by withdrawing a given amount of the circulation gas and equalizing the amount of the inert gas components contained therein with the input amount.

The discharged purge gas 307a contains a large amount of combustible components and can be utilized as a fuel. This means that the larger the withdrawn amount is, the larger the withdrawn amount of effective components to be used in the methanol synthesis is, and hence the lower the yield of methanol is. Therefore, it is desirable that the amount of the inert gas components contained in the initial synthesis gas be as small as possible. In this embodiment, as described above, the purge gas 307a is returned to the upstream side of the hydrogen separating apparatus 120 through the pipe 412 to prevent yield of methanol from lowering (see FIG. 1). Specifically, inert gas components such as nitrogen and argon contained in the purge gas 307a should be finally discharged to the outside of the system. However, since the purge gas 307a contains an unreacted hydrogen gas, the unreacted hydrogen gas can be recovered by passing the purge gas 307a through the hydrogen separating apparatus 120 before discharging the purge gas 307a to the outside of the system. Since the purge gas 307a also contains unreacted carbon monoxide and carbon dioxide, when the purge gas 307a is returned to the upstream of the three-way valve 452, for example, the unreacted carbon monoxide and carbon dioxide can also be recovered. In this case, however, a part of the inert gas components removed from the methanol synthesis process is introduced again into the methanol synthesis process through the pipe 406, thus lowering yield of methanol.

On the other hand, as shown in FIG. 4, when the purge gas 307a is returned to a portion immediately before the hydrogen separating apparatus 120, the inert gas components contained in the purge gas 307a can be reliably discharged as the excess gas k to the outside of the methanol synthesis process to prevent yield of methanol from lowering, and particularly preferably, to recover the hydrogen gas contained in the purge gas 307a as a part of the pure hydrogen j for thereby improving the yield of methanol.

Although the liquid fuel synthesis process using a synthesis gas has been described by taking methanol as an example of the liquid fuel, even in other fuels such as dimethyl ether, gasoline, kerosene, and gas oil, the fundamental construction of the process is substantially the same as the above embodiment, and only the type of the catalyst and reaction conditions are partly different from the above embodiment.

In the case of the synthesis of dimethyl ether, basically, a dehydration catalyst is added to the same catalyst as used in the methanol synthesis, and the reaction is carried out under conditions of a temperature of 250 to 300°C and a pressure of 5 to 10 MPa. That is, in the dimethyl ether synthesis, the reaction conditions are substantially the same as used in the methanol synthesis.

In the case of the synthesis of hydrocarbon fuel such as gasoline, kerosene, and gas oil, an iron-based catalyst or a cobalt-based catalyst is used. When the iron-based catalyst is used, the reaction is generally carried out under conditions of a temperature of 250 to 350°C and a pressure of 2.0 to 4.0 MPa. On the other hand, when the cobalt-based catalyst is used, the reaction is carried out under conditions of a temperature of 220 to 250°C and a pressure of 0.5 to 2.0 MPa. This reaction is called "Fischer-Tropsch reaction" which is carried out at substantially the same temperature as the methanol synthesis although the pressure is slightly lower than that in the methanol synthesis. In this process, various hydrocarbon fuels such as gasoline, kerosene, and gas oil are produced as a mixture thereof, and hence gasoline, kerosene, gas oil, and the like can be produced separately from one another by using a multistage distillation apparatus.

Due to the nature of the above processes, any of the processes should satisfy the following requirements for efficient liquid fuel synthesis.

First, the calorific value of the synthesis gas should be high. Specifically, the concentrations of $H_2$ and CO gases as effective components should be high. This means that the amount of excess gas components, particularly combustion gas components such as $CO_2$ and $H_2O$, is not large. In the case of partial combustion gasification, it is particularly important to lower the proportion of partial combustion as much as possible.

Secondly, the concentrations of inert gases such as nitrogen and argon are preferably as low as possible. Since it is difficult to remove these gases before the liquid fuel synthesis process, they are removed as a purge gas by carrying them together with the circulation gas in the reaction system. Thus, when the amount of the inert gases is large, the withdrawn amount of the components ($H_2$, CO, etc.) effective for the reaction is also large to cause a lowering of yield of the final liquid fuel.

The above two matters mean that the amount of excess gas components in the reaction is preferably as small as possible. This is also important because the smaller the amount of the excess gas components is, the lower the compression power necessary for the compression of the produced gas is, and hence the higher the energy efficiency of the process becomes.

Thirdly, the $H_2$/CO ratio in the synthesis gas should be proper. Stoichiometrically, the highest reaction efficiency can be achieved at $H_2$/CO ratio = 2 for methanol synthesis and at $H_2/CO$ ratio = 1 for dimethyl ether synthesis. When the $H_2/CO$ ratio is lower than the above value, the $H_2/CO$ ratio should be regulated in the CO shift conversion process. On the other hand, when the $H_2/CO$ ratio is higher than the above value, the CO shift conversion process is unnecessary, and hence'the cost can be reduced.

Fourthly, the amount of impurities such as chlorine, sulfur and dust contained in the synthesis gas is preferably as small as possible. When this requirement is satisfied, a reduction in cost can be achieved in the scrubbing process, the desulfurization process, and the like.

In addition to the above, in consideration of the fact that the liquid fuel synthesis reaction is normally exothermic reaction, medium-pressure steam can be recovered, and low-pressure steam is required as a heat source in the distillation process of the final product, it is important, from the viewpoint of enhancing the energy efficiency, to construct the process so that the maximum utilization of heat in the whole process including the gasification process can be achieved.

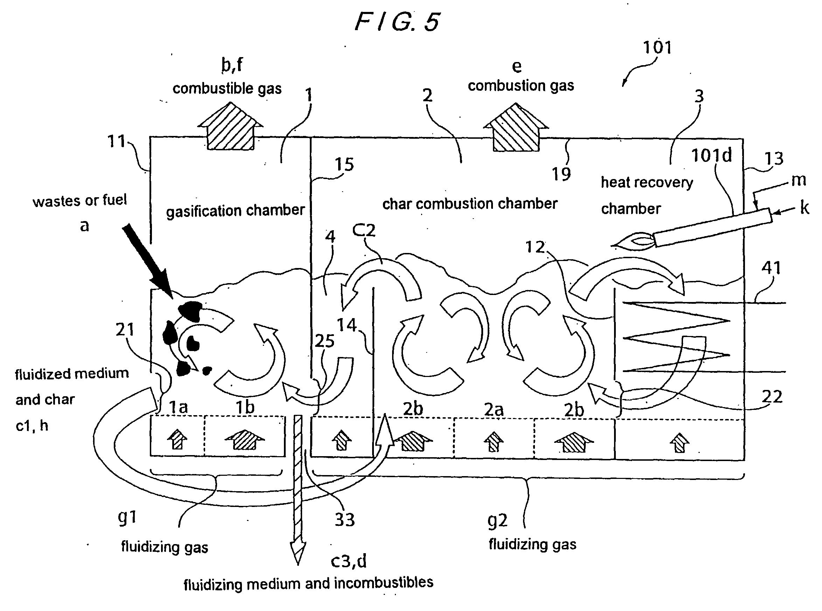

Next, the second embodiment of the present invention will be described with reference to FIGS. 4 and 5.

The methanol synthesis system in the second embodiment is characterized in that an integrated gasification furnace (described later on) serving as an apparatus for production of a synthesis gas as a raw material of the methanol synthesis is used to produce a synthesis gas having a composition suitable for thethemethanol synthesis fromwastes or a solid fuel as a feedstock material.

FIG. 4 is a flow chart of a methanol synthesis system according to a second embodiment of the present invention. Those parts which are identical or corresponding parts in the first embodiment are denoted by identical or similar reference numerals, and repetitive description is eliminated.

The methanol synthesis system in the second embodiment includes an integrated gasification furnace 101 for pyrolyzing and gasifying a material a to be treated to produce a synthesis gas (produced gas) b, and a gas purifying apparatus 102' for separating the synthesis gas b into a hydrogen gas j and an excess gas k.

In the second embodiment, the gas purifying apparatus 102' includes a scrubber 103, a gas compressing apparatus 107, and a hydrogen separating apparatus 120. The gas purifying apparatus 102' further includes a desulfurizer 105 for desulfurizing the synthesis gas b. The desulfurizer 105 is installed between the scrubber 103 and the gas compressing apparatus 107. The gas purifying apparatus 102' is not provided with the three-way valve 451 and the CO shift converter 104 incorporated in the first embodiment of the present invention. Therefore, the pipe 401 extending from the discharge port of the gas compressing apparatus 107 is connected directly to the three-way valve 452. The excess gas pipe 412 extending from the methanol synthesis apparatus system 300 is connected so as to join the pipe 405 between the three-way valve 452 and the hydrogen separating apparatus 120.

The methanol synthesis system in the second embodiment further includes a waste heat boiler 201 for recovering heat from exhaust gas discharged from the integrated gasification furnace 101, a dust collector 202 for removing the solidmatter accompanied by exhaust gas from the waste heat boiler 201, and a stack 203 for discharging gas dedusted in the dust collector 202.

An exhaust port provided on the top of the gas scrubber 103 is connected to the desulfurizer 105. The desulfurizer 105 is an apparatus comprising a tank-shaped container packed with a desulfurization catalyst and is particularly used for the removal of $H_2S$ gas. A gas compressing apparatus 107 is connected to the downstream of the desulfurizer 105. In the gas compressing apparatus 107, the desulfurized synthesis gas is compressed. A pressure and the like in compression are the same as those in the first embodiment.

The pipe 129 for the excess gas k discharged from the hydrogen separating apparatus 120 is connected to a burner 101d in the integrated gasification furnace which will be described later.

Next, an integrated gasification furnace according to an embodiment of the present invention will be described below with reference to FIG. 5 which is a conceptual cross-sectional view. An integrated gasification furnace 101 has a gasification chamber 1, a char combustion chamber 2, and a heat recovery chamber 3 for performing respective three functions of pyrolysis, i. e., gasification, char combustion, and heat recovery, the chambers being housed in a furnace which is cylindrical or rectangular, for example, in shape. The gasification chamber 1, the char combustion chamber 2, and the heat recovery chamber 3 are divided by partition walls 11, 12, 13, 14 and 15 to form fluidized beds, each comprising a dense bed containing a fluidized medium, in respective bottoms. Diffusion devices for blowing fluidizing gases into the fluidized medium are disposed on the furnace bottom of the chambers 1, 2 and 3 for causing the fluidized medium to be fluidized in the fluidized beds in the chambers 1, 2 and 3, i.e., the gasification chamber fluidized bed, the char combustion chamber fluidized bed, and the heat recovery chamber fluidized bed. Each of the diffusion devices comprises a porous plate, for example, placed on the furnace bottom. The diffusion device is divided into a plurality of compartments by partitioning the porous plate in a width direction. In order to change the superficial velocity in various parts in each of the chambers, the speed of the fluidizing gases discharged from the compartments of the diffusion devices through the porous plate is changed. Since the superficial velocity differs relatively from part to part in the chambers, the fluidized medium in the chambers flows in different conditions in the parts of the chambers, thus developing internal revolving flows. Further, since a fluidized state of the fluidizedmedium differs in the parts of the chambers, the internal revolving flows are circulated in the respective chambers in the furnace. In FIG. 1, the sizes of arrows with hatching in the diffusion devices represent the velocity of the discharged fluidizing gases. For example, thick arrows in areas indicated by the reference numeral 2b represent a velocity of the discharged fluidizing gases higher than a velocity of the discharged fluidizing gas represented by a thin arrow in an area indicated by the reference numeral 2a.

The gasification chamber 1 and the char combustion chamber 2 are divided from each other by the partition wall 11 and the partition wall 15, the char combustion chamber 2 and the heat recovery chamber 3 are divided from each other by the partition wall 12, and the gasification chamber 1 and the heat recovery chamber 3 are divided from each other by the partition wall 13. In FIG. 5, the furnace is shown in development elevation, and hence the construction of the furance is shown as if the partition wall 11 is not provided between the gasification chamber 1 and the char combustion chamber 2, and the partition wall 13 is not provided between the gasification chamber 1 and the heat recovery chamber 3. Specifically, the integrated gasification furnace 101 has such a construction that the respective chambers are not installed as separate furnaces, but installed as a single furnace. A settling char combustion chamber 4 for settling the fluidized medium therein is disposed near a place of the char combustion chamber 2 which is in contact with the gasification chamber 1. Thus, the char combustion chamber 2 is separated into the settling char combustion chamber 4 and the char combustion chamber main portion other than the setting char combustion chamber 4. Thus, the partition wall 14 is provided to partition the settling char combustion chamber 4 from another portion of the char combustion chamber 2 (char combustion chamber main portion). The settling char combustion chamber 4 and the gasification chamber 1 are divided from each other by the partition wall 15.

A fluidized bed and an interface will be described below. The fluidizedbed comprises a dense bed, positioned in a vertically lower region, which contains a high concentration of fluidized medium (e.g., silica sand) that is held in a fluidized state by the fluidizing gas, and a splash zone, positioned vertically upwardly of the dense bed, which contains both the fluidizedmedium and a large amount of gases, with the fluidized medium splashing violently. Upwardly of the fluidized bed, i.e., upwardly of the splash zone, there is positioned a freeboard which contains almost no fluidized medium, but is primarily made up of gases. The interface refers to a splash zone having a certain thickness. Otherwise, the interface may be understood as a hypothetical plane positioned intermediate between an upper surface of the splash zone and a lower surface of the splash zone (upper surface of the dense bed).

Furthermore, with respect to a statement "chambers are divided from each other by a partition wall so as not to allow gases to flow therebetween vertically upwardly from an interface of a fluidized bed", it is preferable that no gases flow therebetween above the upper surface of the dense bed below the interface.

The partition wall 11 between the gasification chamber 1 and the char combustion chamber 2 extends substantially fully from a ceiling 19 of the furnace toward the furnace bottom (the porous plates of the diffusion devices). However, the partition wall 11 has a lower end which is not in contact with the furnace bottom, and has a second opening 21 near the furnace bottom. However, the opening 21 has an upper end which does not extend upwardly from both of the gasification chamber fluidized bed interface and the char combustion chamber fluidizedbed interface. Preferably, the upper end of the opening 21 does not extend upwardly from both of the upper surface of the dense bed of the gasification chamber fluidized bed and the upper surface of the dense bed of the char combustion chamber fluidized bed. That is to say, the opening 21 should preferably be arranged so as to be submerged in the dense bed at all times. Thus, the gasification chamber 1 and the char combustion chamber 2 are divided from each other by the partition wall such that no gases flow therebetween at least in the freeboard, or upwardly from the interface, or more preferably upwardly from the upper surface of the dense bed.

The partition wall 12 between the char combustion chamber 2 and the heat recovery chamber 3 has an upper end located near the interface, i.e., upwardly from the upper surface of the dense bed, but positioned downwardly from the upper surface of the splash zone. The partition wall 12 has a lower end which extends in the vicinity of the furnace bottom, but is not in contact with the furnace bottom as with the partition wall 11. The partition wall 12 has an opening 22 near the furnace bottom, which does not extend upwardly from the upper surface of the dense bed. In other words, the char combustion chamber 2 and the heat recovery chamber 3 are separated from each other only in the fluidized-bed portion by the partition wall 12, the partition wall 12 has the opening 22 near the furnace bottom, and the fluidized medium in the char combustion chamber 2 flows into the heat recovery chamber 3 from the upper part of the partition wall 12, passes through the opening 22 near the furnace bottom and returns to the char combustion chamber 2 again, thus forming a circulating flow.

The partition wall 13 between the gasification chamber 1 and the heat recovery chamber 3 extends fully from the furnace bottom to the furnace ceiling. The partition wall 14 which divides the char combustion chamber 2 to provide the settling char combustion chamber 4 has an upper end located near the interface of the fluidized bed and a lower end which is in contact with the furnace bottom. The relationship between the upper end of the partition wall 14 and the fluidized bed is the same as the relationship between the partition wall 12 and the fluidized bed. The partition wall 15 which divides the settling char combustion chamber 4 and the gasification chamber 1 from each other is the same as the partition wall 11. The partition wall 15 extends substantially fully from the furnace ceiling to the furnace bottom. The partition wall 15 has a lower end which is not in contact with the furnace bottom, and has a first opening 25 near the furnace bottom. The opening 25 has an upper end which is positioned downwardly from the upper surface of the dense bed. Therefore, the relationship between the first opening 25 and the fluidized bed is the same as the relationship between the opening 21 and the fluidized bed.

Wastes or solid fuel a charged into the gasification chamber 1 is heated by the fluidizedmediumcl, and pyrolyzed and gasified. Typically, the wastes or fuel a is not combusted, but dry-distilled, in the gasification chamber 1. Remaining dry-distilled char h and the fluidized medium c1 flow into the char combustion chamber 2 through the opening 21 in the lower portion of the partition wall 11. The char h thus introduced from the gasification furnace 1 is combusted in the char combustion chamber 2 to heat the fluidi zed medium c2. The fluidized medium c2 heated by the combustion heat of the char h in the char combustion chamber 2 flows beyond the upper end of the partition wall 12 into the heat recovery chamber 3. In the heat recovery chamber 3, the heat of the fluidized medium is recovered by a submerged heat transfer pipe 41 disposed downwardly from the interface in the heat recovery chamber 3, so that the fluidized medium is then cooled. The fluidized medium then flows through the lower opening 22 in the partition wall 12 into the char combustion chamber 2.

The heat recovery chamber 3 is not indispensable for the gas supply apparatus according to the embodiment of the present invention. Specifically, if the amount of char h, composedmainly of carbon, remaining after the volatile components are gasified in the gasification chamber 1 and the amount of char required to heat the fluidized medium c2 in the char combustion chamber 2 are nearly equal to each other, then the heat recovery chamber 3 which deprives the fluidized medium of heat is not necessary. If the difference between the above amounts of char is small, then the gasification temperature in the gasification chamber 1 becomes higher, resulting in an increase in the amount of a CO gas generated in the gasification chamber 1, so that a balance will be kept in the gasification chamber 1.

In the case that the heat recovery chamber 3 shown in FIG. 5 is employed, the integrated gasification furnace is capable of handling a wide variety of wastes or fuels ranging from coal which produces a large amount of char to municipal wastes which produce a little amount of char. Therefore, irrespective of whatever wastes or fuel may be used, the combustion temperature in the char combustion chamber 2 can appropriately be adjusted to keep the temperature of the fluidized medium adequately by controlling the amount of heat recovered in the heat recovery chamber 3.

The fluidized medium c2 which has been heated in the char combustion chamber 2 flows beyond the upper end of the partition wall 14 into the settling char combustion chamber 4, and then flows through the opening 25 in the lower portion of the partition wall 15 into the gasification chamber 1.

The fluidized state and movement of the fluidized medium between the chambers will be described below.

A region in the gasification chamber 1 which is near and in contact with the partition wall 15 between the gasification chamber 1 and the settling char combustion chamber 4 serves as a strongly fluidized region 1b where a fluidized state is maintained more vigorously than the fluidized state in the settling char combustion chamber 4. The superficial velocity of the fluidizing gases may be varied from place to place in order to promote the mixing and diffusion of the charged fuel and the fluidized medium as a whole. For example, as shown in FIG. 5, a weakly fluidized region 1a may be produced in addition to the strongly fluidized region 1b for forming revolving flows.

The char combustion chamber 2 has a weakly fluidized region 2a at a central portion thereof and a strongly fluidized region 2b at a peripheral portion thereof, causing the fluidized medium and the char to form internal revolving flows. It is preferable that the fluidizing velocity of the gas in the strongly fluidized regions in the gasification chamber 1 and the char combustion chamber 2 be 5 Umf or higher, and the fluidizing velocity of the gas in the weakly fluidized regions therein be 5 Umf or lower. However, the fluidizing velocities of the gas may exceed these ranges if a relative clear difference is provided between the fluidizing velocity in the weakly fluidized region and the fluidizing velocity in the strongly fluidized region. The strongly fluidized region 2b may be arranged in regions in the char combustion chamber 2 which contact the heat recovery chamber 3 and the settling char combustion chamber 4. If necessary, the furnace bottom may have such a slope that the furnace bottom goes down from the weakly fluidized region toward the strongly fluidized region (not shown). Here, "Umf" represents theminimum fluidization velocity (the gas velocity at which fluidization begins) of the fluidized medium. Therefore, 5 Umf represents a velocity which is five times the minimum fluidization velocity of the fluidized medium.

As described above, the fluidized state in the char combustion chamber 2 near the partition wall 12 between the char combustion chamber 2 and the heat recovery chamber 3 is relatively stronger than the fluidized state in the heat recovery chamber 3. Therefore, the fluidizedmedium flows from the char combustion chamber 2 into the heat recovery chamber 3 beyond the upper end of the partition wall 12 which is positioned near the interface of the fluidized bed. The fluidized medium that has flowed into the heat recovery chamber 3 moves downwardly (toward the furnace bottom) because of the relatively weakly fluidized state, i.e., the highly dense state, in the heat recovery chamber 3, and then moves from the heat recovery chamber 3 through the opening 22 in the lower end of the partition wall 12 near the furnace bottom into the char combustion chamber 2.

Similarly, the fluidized state in the major part of the char combustion chamber 2 near the partition wall 14 between the major part of the char combustion chamber 2 and the settling char combustion chamber 4 is relatively stronger than the fluidized state in the settling char combustion chamber 4. Therefore, the fluidized medium flows from the major part of the char combustion chamber 2 into the settling char combustion chamber 4 beyond the upper end of the partition wall 14 which is positioned near the interface of the fluidized bed. The fluidized medium that has flowed into the settling char combustion chamber 4 moves downwardly (toward the furnace bottom) because of the relatively weakly fluidized state, i.e., the highly dense state, in the settling char combustion chamber 4, and then moves from the settling char combustion chamber 4 through the opening 25 in the lower end of the partition wall 15 near the furnace bottom into the gasification chamber 1. The fluidized state in the gasification chamber 1 near the partition wall 15 between the gasification chamber 1 and the settling char combustion chamber 4 is relatively stronger than the fluidized state in the settling char combustion chamber 4. Thus, movement of the fluidizedmedium from the settling char combustion chamber 4 into the gasification chamber 1 is promoted by the inducing action.

Similarly, the fluidizedstate in the char combustion chamber 2 near the partition wall 11 between the gasification chamber 1 and the char combustion chamber 2 is relatively stronger than the fluidized state in the gasification chamber 1. Therefore, the fluidized medium flows through the opening 21 (submerged in the dense bed) in the partition wall 11 below the interface of the fluidized bed, preferably below the upper surface of the dense bed, into the char combustion chamber 2.

The heat recovery chamber 3 is uniformly fluidized, and usually maintained in a fluidized state which is, at maximum, weaker than the fluidized state in the char combustion chamber 2 which is in contact with the heat recovery chamber. The superficial velocity of the fluidizing gases in the heat recovery chamber 3 is controlled to be in the range from 0 to 3 Umf, and the fluidized medium is fluidized weakly, thus forming a settled fluidized layer. The superficial velocity 0 Umf represents that the fluidizing gases are stopped. In this manner, the heat recovery in the heat recovery chamber 3 can be minimized. That is, the heat recovery chamber 3 is capable of adjusting the amount of recovered heat in a range from maximum to minimum levels by changing the fluidized state of the fluidized medium. In the heat recovery chamber 3, the fluidization can be initiated and stopped, or adjusted in its intensity uniformly throughout the whole chamber, the fluidization can be stopped in a certain area of the chamber and performed in the other area, or the fluidization in the certain area of the chamber can be adjusted in its intensity.

Relatively large incombustibles contained in the wastes or fuel are discharged from an incombustible discharge port 33 provided in the furnace bottom of the gasification chamber 1. The furnace bottom in each of the chambers may be horizontal, but the furnace bottom may be slanted along the flows of the fluidized medium in the vicinity of the furnace bottom so that the flows of the fluidized medium will not be kept stagnant. An incombustible discharge port 33 may be provided not only in the furnace bottom of the gasification chamber 1, but also in the furnace bottom of the char combustion chamber 2 or the heat recovery chamber 3.

Most preferably, the fluidizing gas in the gasification chamber 1 comprises a produced gas b which is pressurized and recycled. In the case where the fluidizing gas comprises a produced gas, the gas discharged from the gasification chamber 1 is the gas produced only from the fuel, and hence a gas of very high quality can be obtained. In the case where the fluidizing gas cannot be a produced gas, it may comprise a gas containing as little oxygen as possible (oxygen-free gas), such as steam, carbon dioxide ($CO_2$) or a combustion exhaust gas discharged from the char combustion chamber 2. If the bed temperature of the fluidized medium is lowered due to the endothermic reaction upon gasification, then a combustion exhaust gas having a higher temperature than the pyrolysis temperature may be supplied as needed, or oxygen or an oxygen containing gas, e.g., air, may be supplied, in addition to the oxygen-free gas, to combust part of the produced gas. The fluidizing gas supplied to the char combustion chamber 2 comprises an oxygen containing gas, e.g., air or a mixed gas of oxygen and steam, required to combust the char. In the case of the fuel a having a low calorific value (calorie), oxygen content shouldbe large, and hence oxygen should be supplied as it is. The fluidizing gas supplied to the heat recovery chamber 3 comprises air, steam, a combustion exhaust gas, or the like.

Areas above the surfaces of the fluidized beds (the upper surfaces of the splash zones) in the gasification furnace 1 and the char combustion chamber 2, i.e., the freeboards, are completely divided by the partition walls 11, 15. More specifically, areas above the surfaces of the dense beds of the fluidized beds, i.e., the splash zones and the freeboards are completely divided by the partition walls. Therefore, even when the pressures of the freeboards in the char combustion chamber 2 and the gasification furnace 1 are brought out of balance to some extent, the pressure difference can be absorbed by a slight change in the difference between the positions of the interfaces of the fluidized beds in the chambers, or the difference between the positions of the surfaces of the dense beds, i.e., the bed height difference.

Specifically, since the gasification furnace 1 and the char combustion chamber 2 are divided from each other by the partition walls 11, 15, even when the pressures in these chambers are varied, the pressure difference can be absorbed by the bed height difference until either one of the beds is lowered to the upper end of the openings 21, 25. Therefore, an upper limit for the pressure difference between the freeboards in the char combustion chamber 2 and the gasification furnace 1 which can be absorbed by the bed height difference is substantially equal to the difference between the head of the gasification chamber fluidized bed from the upper end of the openings 21, 25 and the head of the char combustion chamber fluidized bed from the upper end of the openings 21, 25.

In the integrated gasification furnace 101 described above, the three chambers, i.e., the gasification chamber, the char combustion chamber, and the heat recovery chamber, which are divided from each other by the partition walls, are disposed in one fluidized-bed furnace, with the char combustion chamber and the gasification chamber being positioned adjacent to each other, and the char combustion chamber and the heat recovery chamber being positioned adjacent to each other. In the integrated gasification furnace 101, since a large amount of fluidized medium can be circulated between the char combustion chamber and the gasification chamber, the quantity of heat required for gasification can sufficiently be supplied only by the sensible heat of the fluidized medium.

In the above integrated gasification furnace, since a complete seal is provided between char combustion gas and produced gas, the pressure balance between the gasification chamber and the char combustion chamber is controlled well without causing the combustion gases and the produced gas to be mixed with each other and degrading the quality of the produced gas.

The fluidized medium c1 as the heat medium and the char h flow from the gasification chamber 1 into the char combustion chamber 2, and the same amount of fluidized medium c2 returns from the char combustion chamber 2 to the gasification chamber 1. Therefore, budget of fluidized medium is naturally balanced. It is not necessary to mechanically deliver, with a conveyor or the like, the fluidized medium from the char combustion chamber 2 back into the gasification chamber 1. Therefore, the integrated gasification furnace is free of the problems of the difficulty in handling high-temperature particles and a large sensible heat loss.

The integrated gasification furnace 101 according to this embodiment further includes an excess gas burner 101d for combusting the excess gas k separated from hydrogen in the hydrogen separating apparatus 120. Combustion by means of the excess gas burner 101d is carried out in the char combustion chamber 2 or the heat recovery chamber 3. The excess gas is mixed with air m before the burner 101d and is combusted in the char combustion chamber 2.

Returning to FIG. 4, the operation of the methanol synthesis system in the second embodiment will be described. The wastes or fuel a supplied to the gasification chamber 1 in the integrated gasification furnace 101 is pyrolyzed into a combustible gas b, char, and ash. The wastes or fuel a is preferably organic wastes or fuel having a certain high level of calorific value such as waste plastic, waste tire, car shredder dust, ligneous wastes, municipal waste RDF, coal, heavy oils, or tar.

In the char produced by pyrolysis in the gasification chamber 1, char h which has a large particle diameter and is not carried together with the combustible gas is transferred together with the fluidized medium c1 to the char combustion chamber 2. In the char combustion chamber 2, the char h is completely combusted by using, as a fluidizing gas g2, air or an oxygen-containing gas such as oxygen-enriched air or oxygen. A part of quantity of heat generated by combustion of the char h is supplied to the gasification chamber 1 as sensible heat of the fluidized medium c2 circulated and returned to the gasification chamber 1, and is used as quantity of heat necessary for pyrolysis in the gasification chamber 1.

According to this method, the combustible gas generated by pyrolysis of the wastes or solid fuel a in the gasification chamber 1, i.e., the synthesis gas b, is not mixed with a combustion gas e generated by combustion of the char in the char combustion chamber 2. Therefore, a high-calorie synthesis gas suitable for synthesis of a liquid fuel can be obtained.

In particular, when a gas, which does not contain air or an oxygen gas at all, for example, steam, is used as the fluidizing gas g1 in the gasification chamber 1, a high-calorie synthesis gas which contains a combustion gas such as $CO_2$ and $H_2O$ at a low concentration can be produced without partial combustion in the gasification chamber 1 at all by supplying the quantity of heat generated by combustion of the char h in the char combustion chamber 2 through the sensible heat of the fluidized medium c2 to cover the whole quantity of heat necessary for the pyrolysis.

When steam is used as the fluidizing gas g1 in the gasification chamber 1, no inert gasses such as nitrogen gas and argon gas can be contained at all. Therefore, the concentrations of inert gases such as nitrogen and argon in the synthesis gas b can be kept low. Thus, since the flow rate of the synthesis gas can be reduced, the gas compressing apparatus 107 and the CO shift converter (not shown in FIG. 4) provided at the subsequent stage, and the hydrogen separating apparatus 120 and the like can be small in size, and the power necessary for gas compression can be reduced.

In the case of the conventional partial combustion-type gasification furnace, in order not to mix nitrogen into the synthesis gas, it is necessary to supply pure oxygen as an oxidizing agent. However, according to the integrated gasification furnace 101 of this embodiment, even if air is used as the oxidizing agent in the char combustion chamber 2, nitrogen contained in the air is not mixed into the synthesis gas b. Therefore, both of a reduction in power necessary for oxygen production and a reduction in concentration of nitrogen gas in the synthesis gas b can be achieved, and thus this is particularly effective.

The integrated gasification furnace 101 in this embodiment is characterized in that quantity of heat generated by combustion of heavy components such as char produced by pyrolysis and gasification of thematerial a tobe treatedis utilized as quantity of heat necessary for pyrolysis and gasification of the material a to be treated.

In this case, heavymaterials such as char have a high carbon content, and they are completely combusted in the char combustion chamber 2. Therefore, carbon dioxide generated by combustion of carbon contained in the heavy materials such as char is not mixed into the synthesis gas bproduced in the gasification chamber 1. This corresponds to the fact that the hydrogen component and the carbon component in the material a to be treated selectively change the proportion of the synthesis gas b and the combustion gas e which are separated from each other and recovered. Specifically, the hydrogen component in the material a to be treated is recovered in a relatively larger proportion on the synthesis gas side, while the carbon component in the material to be treated is recovered in a larger proportion on the combustion gas side. Thus, the hydrogen content in the synthesis gas b is higher than that in the case where the conventional partial combustion-type gasification apparatus is used. Typically, a synthesis gas having a high hydrogen content, i.e. a hydrogen-to-carbon monoxide molar ratio of not less than 2, can be easily obtained.

The synthesis gas b thus obtained is led to the gas purifying apparatus 102'. Depending upon the temperature of the synthesis gas b, a construction may be such that the synthesis gas is lowered in temperature by heat recovery using a waste heat boiler (not shown), and then the synthesis gas is led to the gas purifying apparatus.

The gas purifying apparatus 102' in this embodiment includes a gas scrubber 103 as an unwanted material removing apparatus, a desulfurizer 105, a synthesis gas compressing apparatus 107, and a hydrogen separating apparatus 120. In the gas scrubber 103, a chlorine component contained in the synthesis gas b is removed, and dust is removed. Further, in the desulfurizer 105, a sulfur component contained in the synthesis gas b is removed.

After the removal of the unwanted materials, a part of the synthesis gas is led to the hydrogen separating apparatus 120. Therefore, the synthesis gas should be pressurized to a pressure necessary for operation of the hydrogen separating apparatus 120. In this case, since the whole amount of the synthesis gas is not led to the hydrogen separating apparatus 120, only a part of the synthesis gas used for hydrogen separation may be pressurized immediately before the hydrogen separating apparatus 120. However, as shown in FIG. 4, it is desirable that the whole amount of the synthesis gas after the removal of the unwanted materials be pressurized in the synthesis gas compressing apparatus 107. This is because the methanol synthesis is generally carried out under a high pressure of not less than 5 MPa, and hence the pressurization of the synthesis gas is necessary at any rate, and when the CO shift converter is necessary, the capacity of the reactor can be small and the reaction efficiency can be increased by increasing the operating pressure.

The capacity of the desulfurizer 105 can be small by performing compression of the synthesis gas at the preceding stage of the desulfurizer 105. In this case, since a gas containing a sulfur component is passed through the gas compressing apparatus 107, measures should be taken to prevent corrosion of the gas compressing apparatus 107 by the sulfur component from occurring. Therefore, in the case where the corrosion of the synthesis gas compressing apparatus is likely to be caused if the synthesis gas having a very high sulfur content is passed through the synthesis gas compressing apparatus as it is, it is desirable that the desulfurizer 105 be disposed at the preceding stage of the synthesis gas compressing apparatus 107 as shown in FIG. 4.

On the other hand, in the case where the corrosion of the synthesis gas compressing apparatus is likely to be caused if the synthesis gas whose sulfur content is not so high is passed through the synthesis gas compressing apparatus 107 as it is, it is desirable that the desulfurizer 105 be disposed at the subsequent stage of the synthesis gas compressing apparatus 107.

Further, a first desulfurizer for desulfurizing the synthesis gas to such a degree that the corrosion of the synthesis gas compressing apparatus 107 is not caused may be disposed at the preceding stage of the synthesis gas compressing apparatus 107, and a second desulfurizer for desulfurizing the synthesis gas to such a degree that the CO shift converter (not shown in FIG. 4) and the hydrogen separating apparatus 120 are not affected is disposed at the subsequent stage of the synthesis gas compressing apparatus 107.

The synthesis gas discharged from the synthesis gas compressing apparatus 107 should have a pressure enough to take into consideration the operating pressure of the hydrogen separating apparatus 120, the pressure loss of respective pipes, and the pressure loss of the CO shift converter when the CO shift converter is necessary. This pressure is generally not less than 1 MPa, preferably not less than 1.5 MPa, more preferably not less than 2 MPa.

When the operating pressure of the integrated gasification furnace 101 is a negative pressure or a positive pressure of less than about 1 MPa, the compression of the synthesis gas is necessary, as stated above. On the other hand, when the operating pressure of the integrated gasification furnace 101 is not less than about 1 MPa, the synthesis gas compressing apparatus 107 is not always necessary.

As with the synthesis gas in the first embodiment, the synthesis gas compressed in the synthesis gas compressing apparatus 107 may be subjected to the adjustment of the molar ratio of hydrogen to carbon monoxide in the CO shift converter. As in the case of this embodiment, when the material a to be treated is pyrolyzed and gasified in the integrated gasification furnace 101 to produce a synthesis gas, as described above, the CO shift converter is not always necessary because a synthesis gas having a molar ratio of hydrogen to carbon monoxide of not less than 2 can be easily produced.

It should be noted that when the molar ratio of hydrogen to carbon monoxide is less than 2 depending on the properties of the material a to be treated or the operating conditions of the gasification furnace 101, as in the case of the first embodiment, the CO shift converter may be provided upstream of the hydrogen separating apparatus 120. Such case has been described in connection with the first embodiment, and hence the explanation thereof will be omitted.

After the compression, a part of the synthesis gas is led to the hydrogen separating apparatus 120 through the pipe 405. Pure hydrogen j, which has been separated in the hydrogen separating apparatus 120, is mixed with the remaining part of the synthesis gas which has passed through the bypass pipe 406 without being introduced into the hydrogen separating apparatus 120, thereby adjusting the molar ratio between hydrogen, carbon monoxide and carbon dioxide, whereby a purified gas having R=2 or more is obtained. The details have been described in the first embodiment, and hence repetitive description is eliminated.

The purified gas whose components have been adjusted is pressurized by a purified gas compressing apparatus 107' to a pressure necessary for methanol synthesis, and is then led to the methanol synthesis apparatus system 300.

The excess gas 307a withdrawn from the methanol synthesis apparatus system 300 is combustible and has colorific value, and thus may be used as a heat source within the system. However, since the excess gas 307a contains unreacted hydrogen, it is returned through the pipe 412 to the upstream of the hydrogen separating apparatus 120. In this manner, the recovery and utilization of hydrogen can enhance the reaction efficiency of the whole system.

On the other hand, an excess gas k containing carbonmonoxide, carbon dioxide, and a trace of hydrogen which has not been recovered as pure hydrogen is obtained from the hydrogen separating apparatus 120. Since the excess gas k is combustible and has calorific value, it can be utilized as a heat source in the system.

In particular, in the present embodiment, it is desirable that the excess gas k is combusted in the char combustion chamber 2 of the integrated gasification furnace 101 to generate combustion heat which is then used to heat the fluidized medium c2. In this case, the proportion of the material a to be partially combusted in the integrated gasification furnace 101 can be reduced to achieve high gasification efficiency, and hence this is particularly effective.

From the viewpoint of utilizing the quantity of heat of the excess gas k, for example, without combusting the excess gas k in the char combustion chamber 2 of the integrated gasification furnace 101, the excess gas k may be combusted in a combustion apparatus (not shown) to produce a high-temperature combustion gas which is then used as a fluidizing gas g2 for the char combustion chamber 2. However, in this case, there is the possibility that oxygen concentration in the fluidizing gas g2 is lowered, and hence combustion efficiency of the char h in the fluidized bed part of the char combustion chamber 2 is lowered.

On the other hand, as shown in FIG. 4 or FIG. 5, when the excess gas k is combusted in the char combustion chamber 2, there is no danger that oxygen concentration of the fluidized bed in the char combustion chamber 2 is lowered, and advantageously, the fluidized medium c2 can be effectively heated by radiant heat of flame generated by combustion of the excess gas.

Heat recovery can be performed to generate steam from the high-temperature exhaust gas e as a combustion gas discharged from the char combustion chamber 2 by means of the waste heat boiler 201. Further, besides, as described above, heat recovery can be performed from the synthesis gas b discharged from the gasification chamber 1, and since the CO shift reaction and the methanol synthesis reaction are exothermic reaction, heat recovery can also be performed from the CO shift converter and the methanol reactor. The steam produced by the above heat recovery may be used as steam necessary for the system, such as steam supplied as the fluidizing gas g1 to the gasification chamber 1 or steam for a heat source of the methanol distillation apparatus 330, or may be used in a steam turbine (not shown) to generate electricity necessary for the system.

In this methanol synthesis system, power necessary for the compression of the gas in the synthesis gas compressing apparatus 107 and the purified gas compressing apparatus 107' accounts for a major part of necessary power. Therefore, the electric power generated by the steam turbine is preferably used as electric power necessary for the gas compressing apparatus. More preferably, as a drive apparatus for the gas compressing apparatus, by using not an electric motor but a steam turbine, the gas compressing apparatus may be directly driven using the steam produced by the heat recovery.

The excess gas k may be combusted in a heat recovery boiler (not shown) to perform heat recovery as steam, without combusting the excess gas k in the char combustion chamber 2. Alternatively, a part of the excess gas k may be combusted in the char combustion chamber 2 while the remaining part of the excess gas k may be combusted in the heat recovery boiler. In this case, the proportion of the excess gas k to be combusted in the heat recovery boiler is preferably regulated so that the power required for the system including the power required for compression of the produced synthesis gas is equal to the power generated from the steam produced by the heat recovery.

Specifically, when the power required for the system is larger than the generated power, the proportion of the excess gas k to be combusted in the char combustion chamber 2 is lowered to increase the proportion of the excess gas k to be combusted in the heat recovery boiler, whereby the gasification efficiency is lowered to reduce the amount of the synthesis gas b to be produced. In this manner, the power required for compression of the synthesis gas, i.e., the power required for the system is decreased and the power generated by the heat recovery is increased to balance the required power with the generated power.

On the other hand, when the power required for the system is smaller than the generated power, the proportion of the excess gas k to be combusted in the char combustion chamber 2 is increased to reduce the proportion of the excess gas k to be combusted in the heat recovery boiler, whereby the gasification efficiency is enhanced to increase the amount of the synthesis gas b to be produced. In this manner, the power required for compression of the synthesis gas, i.e., the power required for the system is increased and the power generated by the heat recovery is reduced to balance the required power with the generated power. According to this construction, even when there is a variation in calorific value of the material a to be treated, the operation can be carried out while balancing the required power with the generated power in the system, and hence the electric power and heat which are supplied from the outside of the system can be minimized and operation cost of the system can be reduced.

Further, the gas 307a discharged from the methanol synthesis apparatus system 300 may also be combusted in the char combustion chamber 2 or the heat recovery boiler to achieve the same effect as described above.

As described above, according to the present invention, the gas purifying apparatus includes a hydrogen separating apparatus and a bypass line which bypasses the hydrogen separating apparatus, and is constructed so that a part of the synthesis gas is passed through the hydrogen separating apparatus to obtain high-purity hydrogen which is then mixed with the synthesis gas which has passed through the bypass line. Therefore, a liquid fuel synthesis system which can adjust the ratio between hydrogen, carbon monoxide and carbon dioxide in the purified gas and is suitable for synthesis of a liquid fuel using, as a raw material, a synthesis gas containing hydrogen, carbon monoxide and carbon dioxide can be provided.

**Industrial Applicability**

The present invention can be advantageously utilized in a liquid fuel synthesis system suitable for synthesis of a liquid fuel using, as a rawmaterial, a combustible gas which is a synthesis gas containing hydrogen, carbon monoxide and carbon dioxide, a synthesis gas producedby pyrolysis of fossil fuels such as natural gas, petroleum and coal, biomass, and various wastes, for example.

**Claims**

1.  A liquid fuel synthesis system comprising:

    a gas purifying apparatus for adjusting components of a synthesis gas containing hydrogen and carbon monoxide or a synthesis gas containing hydrogen, carbon monoxide and carbon dioxide to produce a purified gas; and
    a liquid fuel synthesis apparatus for synthesizing a liquid fuel using, as a raw material, the purified gas produced in said gas purifying apparatus;
    said gas purifying apparatus comprising a hydrogen separating apparatus and a bypass line which bypasses said hydrogen separating apparatus, said gas purifying apparatus being constructed such that a part of the synthesis gas is passed through said hydrogen separating apparatus to produce high-purity hydrogen, and the produced high-purity hydrogen is mixed with the synthesis gas which has passed through said bypass line to adjust the ratio of hydrogen to carbon monoxide in the purified gas or the ratio between hydrogen, carbon monoxide and carbon dioxide in the purified gas.

2.  A liquid fuel synthesis system according to claim 1, further comprising a gasification apparatus for pyrolyzing and gasifying a material to be treated to produce said synthesis gas to be supplied to said gas purifying apparatus.

3.  A liquid fuel synthesis system according to claim 2, wherein said hydrogen separating apparatus is constructed to remove combustible excessive components from said synthesis gas and to produce high-purity hydrogen; and
        said gasification apparatus is constructed to utilize quantity of heat produced by combustion of the removed excessive components as a part or the whole of heat of reaction necessary for said pyrolysis and gasification.

4. A liquid fuel synthesis system comprising:

a gasification chamber for internally fluidizing a high-temperature fluidized medium to form a gasification chamber fluidizedbed having a first interface and for gasifying amaterial to be treated in said gasification chamber fluidizedbed to produce a synthesis gas containing hydrogen, carbon monoxide and carbon dioxide;

a char combustion chamber for allowing a high-temperature fluidized medium to internally flow to form a char combustion chamber fluidized bed having a second interface and for combusting char, produced by gasification in said gasification chamber, within said char combustion chamber fluidized bed to heat said fluidized medium;

a gas purifying apparatus for adjusting components of the synthesis gas produced in said gasification chamber to produce a purified gas; and

a liquid fuel synthesis apparatus for synthesizing a liquid fuel using said purified gas as a raw material;

said gasification chamber and said char combustion chamber being constructed such that said gasification chamber and said char combustion chamber are separated from each other in a portion vertically above the interfaces of said fluidized beds by a first partition wall so as to prevent gas flow between said two chambers, a communication port for allowing said gasification chamber and said char combustion chamber to communicate with each other is provided in the lower part of said first partition wall so that the height of the upper end of said communication port is as high as or lower than the height of said first interface and said second interface, and the fluidizedmediumheated in said char combustion chamber is moved from said char combustion chamber to said gasification chamber through said communication port;

said gas purifying apparatus comprising a hydrogen separating apparatus and a bypass line which bypasses said hydrogen separating apparatus, saidgas purifying apparatus being constructed such that a part of the synthesis gas is passed through said hydrogen separating apparatus to produce high-purity hydrogen, and the produced high-purity hydrogen is mixed with the synthesis gas which has passed through said bypass line to adjust the ratio between hydrogen, carbon monoxide and carbon dioxide in the purified gas.

5. A liquid fuel synthesis system according to claim 4, wherein said hydrogen separating apparatus is constructed to remove combustible excessive components from said synthesis gas and to produce high-purity hydrogen; and

said gasification apparatus is constructed to utilize quantity of heat produced by combustion of the removed excessive components as a part or the whole of a heat source for heating the fluidized medium in said char combustion chamber.

6. A liquid fuel synthesis system according to any one of claims 1 to 5, wherein said hydrogen separating apparatus comprises an adsorbent for adsorbing said excessive components and a container containing therein said adsorbent and is constructed such that the adsorption of the excessive components by the adsorbent and the desorption of the excessive components from the adsorbent are repeated by introducing the synthesis gas into said container and swinging the pressure within said container between a relatively higher pressure and a relatively lower pressure.

7. A liquid fuel synthesis system according to any one of claims 1 to 6, wherein said liquid fuel synthesis apparatus is constructed to produce a combustible excess gas in synthesizing a liquid fuel, and to mix the combustible excess gas produced in said liquid fuel synthesis apparatus with said synthesis gas on the upstream side of said hydrogen separating apparatus.

FIG. 1

# FIG. 2

# FIG. 3

FIG. 4

# FIG. 5

EP 1 473 352 A1

## INTERNATIONAL SEARCH REPORT

International application No.

PCT/JP03/01345

| A. CLASSIFICATION OF SUBJECT MATTER |
|---|
| Int.Cl$^7$ C10L1/00, C10G2/00 |
| According to International Patent Classification (IPC) or to both national classification and IPC |

| B. FIELDS SEARCHED |
|---|
| Minimum documentation searched (classification system followed by classification symbols) |
| Int.Cl$^7$ C10L1/00, C10G2/00 |
| Documentation searched other than minimum documentation to the extent that such documents are included in the fields searched |
| Electronic data base consulted during the international search (name of data base and, where practicable, search terms used) |
| JICST FILE(JOIS), PATENT FILE(PATOLIS) |

### C. DOCUMENTS CONSIDERED TO BE RELEVANT

| Category* | Citation of document, with indication, where appropriate, of the relevant passages | Relevant to claim No. |
|---|---|---|
| X | DE 19734488 A1 (Thermoselect AG), | 1-7 |
| Y | 30 April, 1998 (30.04.98), | 1-7 |
| | Claims | |
| | & JP 10-231488 A | |
| Y | EP 650950 A1 (MITSUBISHI GAS CHEMICAL CO., INC.), | 1-7 |
| | 03 May, 1995 (03.05.95), | |
| | Claims | |
| | & US 5512599 A    & JP 7-126201 A | |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 31 March, 2003 (31.03.03) | 15 April, 2003 (15.04.03) |

| Name and mailing address of the ISA/ | Authorized officer |
|---|---|
| Japanese Patent Office | |
| Facsimile No. | Telephone No. |

Form PCT/ISA/210 (second sheet) (July 1998)